# EUROPÄISCHE PATENTSCHRIFT

(11) **EP 1 181 461 B1**
(45) Veröffentlichungstag und Bekanntmachung des Hinweises auf die Patenterteilung: **25.02.2004**
(21) Anmeldenummer: 00931151.5
(22) Anmeldetag: 10.05.2000
(51) Int. Cl.: F16B 19/10

(54) **Blindniet für Bauteile unterschiedlicher Wandstärke und Verfahren zum Herstellen eines solchen Blindniets**
Blind Rivet for Structural Parts of Different Wall Thicknesses and Method for Producing such a Blind Rivet
Rivet aveugle pour pièces à parois de différentes épaisseurs et procédé de fabrication dudit rivet

(30) Priorität: 11.05.1999 DE 19921548; 02.07.1999 DE 19930667
(43) Veröffentlichungstag der Anmeldung: 27.02.2002
(73) Patentinhaber: Richard Bergner Verbindungstechnik GmbH & Co KG, 91126 Schwabach (DE)
(72) Erfinder: DEHLKE, Klaus, D-91575 Windsbach (DE)
(74) Vertreter: Tergau & Pohl Patentanwälte
(86) Internationale Anmeldenummer: PCT/EP2000/004143
(87) Internationale Veröffentlichungsnummer: WO 2000/068583

(56) Entgegenhaltungen:
- EP-A- 0 168 355
- EP-A- 0 903 507
- GB-A- 2 330 639

## Beschreibung

Die Erfindung betrifft ein Blindniet mit einer Hülse, die einen Setzkopf und einen Hülsenschaft aufweist, und mit einem durch die Hülse geführten Dorn, der einen Dornkopf und einen Dornschaft aufweist. Die Erfindung betrifft weiterhin ein Verfahren zum Herstellen eines solchen Blindniets.

Ein derartiger Blindniet ist oftmals als sogenannter Dombruchblindniet ausgeführt, bei dem der Dom beim Nietvorgang an einer Sollbruchstelle abbricht. Beim Nietvorgang werden die zu verbindenden Teile typischerweise zwischen dem Setzkopf und einem sogenannten Schließkopf eingeklemmt. Letzterer ist in der Regel durch einen Umformvorgang des Hülsenschafts beim Nietvorgang gebildet. Der Umformvorgang wird dadurch bewirkt, dass auf den Dorn eine Zugkraft ausgeübt wird, welche dazu führt, dass der Dornkopf, welcher dem Setzkopf gegenüberliegend angeordnet ist, eine Verformkraft auf den Hülsenschaft ausübt.

Für eine Vielzahl von Einzelfällen ist bei einem derartigen Dornbruchblindniet ein bündiger Abschluss des in der Hülse verbleibenden Restdomes mit dem Setzkopf gewünscht. Denn ein derartiger Planbruch hat Vorteile im Hinblick auf die Anforderungen an die Tragverhaltenseigenschaft, die Optik sowie die Korrosionsbeständigkeit der Blindnietverbindung.

Ein Dombruchblindniet ist beispielsweise bekannt aus der EP 0 527 581 B1. Aus diesem Dokument sind prinzipiell zwei unterschiedliche Umformvorgänge zur Ausbildung eines Schließkopfes zu entnehmen. Zum einen sind zwei dem Setzkopf gegenüberliegende separate Hülsenteile vorgesehen, wobei das erste Hülsenteil mittels des Dornkopfes über das zweite Hülsenteil geschoben wird, so dass sich das erste Hülsenteil unter Ausbildung eines Schließkopfes aufspreizt und sich mit seiner Stirnseite an dem zu verbindenden Bauteil abstützt. Der Außendurchmesser des Dornkopfes ist dabei gleich dem des ersten Hülsenteils. In einer alternativen Ausgestaltung ist die Hülse für die Ausbildung des Schließkopfes einstückig ausgebildet und weist einen Verformungsbereich auf, der beim Nietvorgang gefaltet wird, so dass ein ringartiger Wulst an einer vorbestimmten Position entsteht. Auch hier ist der Außendurchmesser des Dornkopfes gleich dem der Hülse. in beiden Fällen bildet sich der Schließkopf immer an der gleichen Längsposition der Hülse aus, so dass der Abstand zwischen dem Setzkopf und dem Schließkopf festgelegt ist. Der bekannte Blindniet ist daher lediglich für einen konstanten Klemmbereich, also für eine vorbestimmte Bauteildicke der zu verbindenden Bauteile, ausgelegt. Der Blindniet muss daher entsprechend dem jeweils geplanten Anwendungsfall speziell ausgelegt werden.

Um eine größere Einsetzbarkeit eines Blindniets zu erreichen, ist gewünscht, dass mit dem Blindniet Bauteile unterschiedlicher Dicke zusammenfügbar sind, dass sich also mit dem Blindniet unterschiedlich große Klemmbereiche verwirklichen lassen. Dadurch werden Lagerhaltungskosten gering gehalten und die Gefahr von Verwechslungen bei der Verarbeitung gleicher Blindniete mit unterschiedlichen Klemmbereichen ausgeschlossen. Hierbei besteht jedoch oftmals das Problem, dass bei einem Dornbruchblindniet aufgrund der unterschiedlichen Klemmbereiche ein Planbruch, also das bündige Abschließen des Restdorns mit dem Setzkopf, nicht möglich ist.

Aus der DE 28 21 356 C2 ist ein Dornbruchblindniet zu entnehmen, bei dem der Schließkopf durch Übereinanderschieben zweier Hülsenteile gebildet wird. Um ein bündiges Abschließen des Restdorns mit dem Setzkopf zu erreichen, ist zusätzlich ein Verformbereich zur Ausbildung eines Wulstes durch Hülsenfaltung vorgesehen. Durch diese Faltungsmöglichkeit der Hülse wird ein Planbruch ermöglicht. Der Nachteil dieser Ausführung ist darin zu sehen, dass neben dem Schließkopf ein weiterer Verformbereich im Hülsenschaft vorgesehen sein muss.

Ein alternative Ausbildung eines Dornbruchblindniets mit der Möglichkeit eines Planbruchs bei unterschiedlichen Klemmbereichen ist aus der DE 28 29 984 C2 bekannt. Bei dem hieraus bekannten Dornbruchblindniet weist der Dornkopf mehrere ringartig umlaufende Zähne auf. Der Dornkopf wird beim Nietvorgang in den Hülsenschaft eingezogen, so dass dieser nach außen zur Ausbildung eines Schließkopfes aufgebogen wird. Der Längenausgleich für unterschiedliche Klemmbereiche wird dadurch erzielt, dass in Abhängigkeit der Bauteildicke eine bestimmte Anzahl der Zähne innerhalb der Hülse abknicken, so dass der Dornschaft bei dünneren Bauteilen tiefer in die Hülse eingezogen wird. Der Dornkopf wird dann letztendlich durch die verbleibenden ringartigen Zähne gebildet. Der Nachteil dieser Ausführungsform ist darin zu sehen, dass sowohl bei der Hülse als auch beim Dornkopf ein Umformvorgang stattfinden muss. Zudem ist eine relativ komplexe Geometrie des Dornkopfes erforderlich, die herstellungstechnisch aufwendig ist.

Aus der gattungsbildenden GB 2 330 639 A ist ein Blindniet zu entnehmen, welcher einen mit Längsrilllen versehenen Dornschaft aufweist. Die Niethülse wird in einem aufwändigen mehrstufigem Herstellungsverfahren mit einer sich zum Setzkopf hin verjüngenden Wandstärke ausgebildet. In Setzkopfnähe ist bereits bei dem ungesetzten Niet Hülsenmaterial in die Längsrillen eingepresst.

Der Erfindung liegt die Aufgabe zugrunde, einen möglichst einfach ausgestalteten Blindniet anzugeben, mit dem sich unterschiedliche Klemmbereiche verwirklichen lassen. Der Erfindung liegt weiterhin die Aufgabe zugrunde ein Verfahren zur Herstellung eines solchen Blindniets anzugeben.

Die auf den Blindniet bezogene Aufgabe wird gelöst durch einen Blindniet mit den Merkmalen des Patentanspruchs 1.

Durch die spezielle Ausbildung des Verformungsbereichs, dessen Festigkeit kontinuiedich in Richtung zum Setzkopf abnimmt, lassen sich unterschiedliche Schließkopfpositionen und damit unterschiedliche Klemmbereiche verwirklichen, so dass Bauteile mit unterschiedlichen Bauteildicken zusammengefügt werden können. Gleichzeitig ist erreicht, dass zum Längenausgleich lediglich ein einziger Umformvorgang nach Art einer Hülsenfaltung notwendig ist. Insbesondere ist für eine einfache Ausgestaltung die Unverformbarkeit des Dornkopfes von Vorteil. Eine aufwendige Verformung des Dornkopfes ist nicht erforderlich.

Durch die Abnahme der Festigkeit des Verformungsbereichs in Richtung zum Setzkopf weist der Verformungsbereich in seinem setzkopfnahen Bereich, welcher gleichzeitig der dem zu vernietenden Bauteil nächstgelegene Bereich ist, die geringste Festigkeit auf. Die Festigkeit nimmt mit zunehmenden Abstand vom Setzkopf immer mehr zu.

Damit ist in vorteilhafter Weise erreicht, dass der Schließkopf sich immer unmittelbar an dem zu vernietenden Bauteil ausbildet, da die Bereiche mit geringer Festigkeit als erstes gefaltet werden, so dass sich ein Schließkopf ausbildet. Bei dickeren Bauteilen reicht bereits der Verformungsbereich ein Stück weit in das Bauteil selbst hinein, so dass sich der Bereich mit der geringsten Festigkeit nicht verformen kann. Vielmehr verformt sich der unmittelbar außerhalb des Bauteils befindliche Bereich des Verformungsbereichs, welcher nunmehr die geringste Festigkeit des verbleibenden Verformungsbereichs außerhalb des Bauteils aufweist.

Der Verformungsbereich endet vom Setzkopf beabstandet. Die Festigkeit des Hülsenschafts nimmt im Anschluss an den Verformungsbereich in Richtung zum Setzkopf insbesondere sprunghaft zu . Damit ist sichergestellt, dass das Hülsenmaterial lediglich im Verformungsbereich verformt wird und nicht etwa auch unmittelbar am Setzkopf, an dem das zu vernietende Bauteil anliegt.

Gemäß einer bevorzugten Ausführung ist der Blindniet derart ausgebildet, dass die beim Nietvorgang von dem Dom zurückgelegte Strecke im Wesentlichen unabhängig von der Position des ausgebildeten Schließkopfes, also unabhängig von der Bauteildikke, ist. Dadurch ist ein Planbruch an einer vorgegebenen Sollbruchnut in einfacher Weise ermöglicht. Nach Beendigung des Nietvorgangs ist also die Gesamtlänge des gesetzten Niets vom Setzkopf bis zum Dornkopf unabhängig von der Bauteildicke immer konstant. Lediglich die Position des Schließkopfes ist in Abhängigkeit der Bauteildicke verschieden. Ein derartiger nach Art eines Dornbruchblindniets ausgestalteter Blindniet ist zur Ausbildung unterschiedlicher Klemmbereiche geeignet und gewährleistet gleichzeitig ein planparalleles Abbrechen des Dornschafts mit dem Setzkopf der Hülse.

Vorzugsweise weist hierzu der Dornschaft einen Anschlag auf, welcher beim Nietvorgang gegen einen Gegenanschlag gepresst wird, so dass die auf den Dorn ausgeübte Kraft abrupt zunimmt und zu einem Abreißen des Dornschafts an der Sollbruchnut führt.

Um eine einfache Ausgestaltung zu ermöglichen, ist der Gegenanschlag vorzugsweise an der Hülse angeformt.

Zweckdienlicherweise ist hierbei der Anschlag durch eine Verringerung des Außendurchmessers des Domschafts und der Gegenanschlag durch eine entsprechende Verringerung des Innendurchmessers der Hülse gebildet. Die Hülse weist in der Regel eine Bohrung auf, durch die der Domschaft geführt ist. Diese Bohrung hat also einen Absatz, auf den der Anschlag des Dornschafts zum Aufliegen kommt. Dieser Anschlag ist vorzugsweise im Bereich des Setzkopfes gebildet.

Alternativ zu der Anordnung des Gegenanschlags an der Hülse ist dieser an einem Setzwerkzeug für den Blindniet vorgesehen. Dadurch entfällt die Notwendigkeit eines Absatzes in der Bohrung der Hülse.

Vorzugsweise sind die Hülse sowie der Dorn jeweils einteilig ausgebildet. Damit ist eine herstellungstechnisch einfach zu realisierende Geometrie verwirklicht.

Die unterschiedlichen Festigkeiten des Hülsenschaftes sind dabei vorzugsweise durch eine bereichsabhängige Wärmebehandlung (Weichglühen) mit Abkühlung gebildet. Die Behandlung des Verformungsbereichs erfolgt also partiell, so dass je nach Zusammenspiel von Wärmebehandlung und Abkühlung innerhalb des Verformungsbereichs unterschiedliche Festigkeitswerte erreichbar sind.

Alternativ hierzu sind die unterschiedlichen Festigkeiten durch eine bereichsabhängige Kaltverfestigung gebildet. In der Regel wird auch bei der Kaltverfestigung der Verformungsbereich zunächst wärmebehandelt und weichgeglüht. Während mit der Wärmebehandlung mit anschließender Abkühlung ein insbesondere kontinuierlicher Festigkeitsgradient erzeugbar ist, ist mit der Kaltverfestigung sowohl ein diskreter als auch ein kontinuierlicher Verlauf der Festigkeit im Verformungsbereich erzielbar.

Als dritte vorteilhafte Alternative zur Ausbildung der unterschiedlichen Festigkeiten weist die Hülse unterschiedliche Wanddicken auf. Die Festigkeiten sind also in diesem Fall geometriebedingt.

Um zu gewährleisten, dass der Schließkopf lediglich im Verformungsbereich ausgebildet wird, weisen die Bereiche des Hülsenschafts außerhalb des Verformungsbereichs eine höhere Festigkeit als dieser auf. Die Festigkeit liegt dabei insbesondere um mindestens 20% über der maximalen Festigkeit im Verformungsbereich.

in einer zweckdienlichen Ausgestaltung ist der Dornkopf derart ausgestaltet, dass er vor und nach dem Nietvorgang den Hülsenschaft überdeckt. Der Domkopf liegt also auf dem Hülsenschaft auf. Es erfolgt insbesondere kein Aufweiten oder Verformen des Hülsenschafts im Bereich unmittelbar am Domkopf.

Zur Erhöhung der Nietfestigkeit weist der Dornschaft vorzugsweise eine Verriegelungsrille auf.

Die auf das Verfahren gerichtete Aufgabe wird erfindungsgemäß durch die Merkmale des Anspruchs 14 gelöst, u.a. indem zum Herstellen eines Blindniets mit einer Hülse, die einen Setzkopf und einen sich daran anschließenden Hülsenschaft aufweist, wobei der Hülsenschaft mit einem Verformungsbereich versehen wird, welcher zur Ausbildung eines Schließkopfs beim Nietvorgang dient, und wobei der Verformungsbereich mit Bereichen unterschiedlicher Festigkeiten ausgebildet wird, so dass der Schließkopf an unterschiedlichen Längenpositionen des Verformungsbereichs ausbildbar ist.

Vorteilhafte Ausgestaltungen des Verfahrens sind den Unteransprüchen zu entnehmen.

Ausführungsbeispiele der Erfindung werden im Folgenden anhand der Zeichnung näher erläutert. Es zeigen:
- Fig. 1: einen Dombruchblindniet im Anlieferungszustand,
- Fig. 2: einen Dombruchblindniet im gesetzten Zustand mit einem großen Klemmbereich,
- Fig. 3: einen Dornbruchblindniet im gesetzten Zustand mit einem kleinen Klemmbereich,
- Fig. 4: ein teilweiser Ausschnitt aus einem Dombruchblindniet mit einer unterschiedlichen Wanddicke des Hülsenschafts in einem Verformungsbereich,
- Fig. 5: einen Ausschnitt gemäß Fig. 4 mit gleichbleibender Wanddicke des Hülsenschafts, bei dem die unterschiedliche Festigkeiten im Verformungsbereich durch Wärmebehandlung mit anschließendem Abkühlen oder durch Kaltverfestigung erzeugt sind, und
- Fig. 6: einen schematischen Verlauf der für die Umformarbeit notwendigen Kraft in Abhängigkeit der Länge des Verformungsbereichs.
- Fig. 7 u. 8: einen Dornbruchblindniet im Anlieferungszustand vor dem Nietvorgang zusammen mit einem Setzwerkzeug für den Nietvorgang.

In den Figuren sind gleichwirkende Teile mit den gleichen Bezugszeichen versehen.

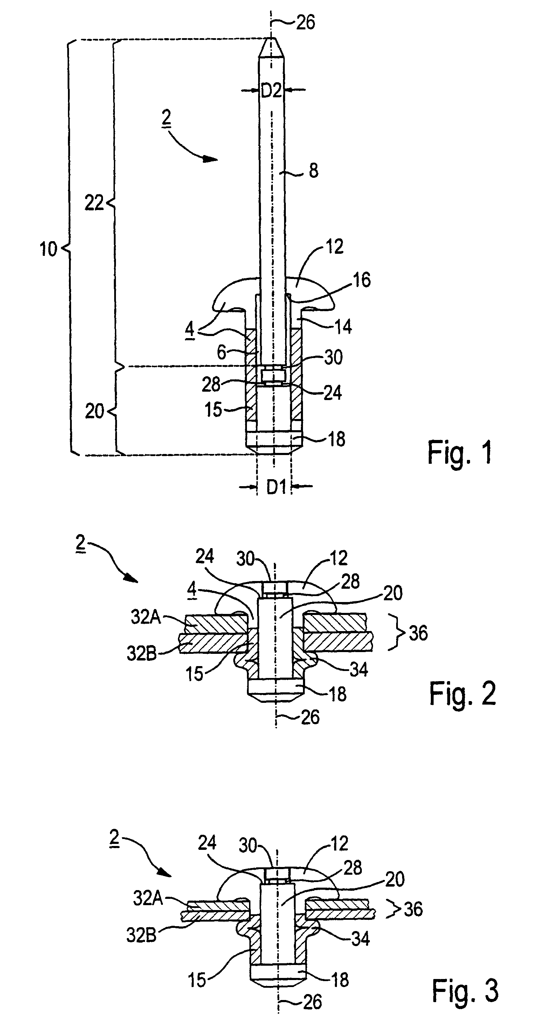

Gemäß Fig. 1 umfasst der Blindniet 2 eine Hülse 4 mit einer Bohrung 6, durch die ein Domschaft 8 eines Dornes 10 geführt ist. Die Hülse 4 weist einen Setzkopf 12 sowie einen sich daran anschließenden Hülsenschaft 14 auf. Der Hülsenschaft 14 hat einen etwa in seiner Mitte angeordneten Verformungsbereich 15, welcher in Fig. 1 schraffiert dargestellt ist. Im Bereich des Setzkopfes 12 weist die Bohrung 6 einen Absatz auf, welcher als Gegenanschlag 16 dient.

Der Dorn 10 weist neben dem Dornschaft 8 endseitig einen Dornkopf 18 auf, welcher auf dem Ende des Hülsenschafts 14 aufliegt und gegenüber dem Setzkopf 12 angeordnet ist. Der Domkopf 18 weist dabei den gleichen Außendurchmesser wie der Hülsenschaft 14 auf und ist mit diesem vorzugsweise fest verbunden. Der Dornschaft 8 ist unterteilt in einen Restdornschaft 20 und einen Schaftbereich 22. Der Restdornschaft 20 erstreckt sich vom Dornkopf 18 bis zu einer Sollbruchnut 30 und weist einen Anschlag 24 auf, der durch eine Verringerung des Durchmessers D1 auf einen Durchmesser D2 des Domschafts 8 gebildet ist. Im Anschluss an den Anschlag 24 ist in Längsrichtung 26 in Richtung zum Setzkopf 12 eine Verriegelungsrille 28 sowie die Sollbruchnut 30 angeordnet. Der Blindniet 2 ist demnach als Dornbruchblindniet ausgebildet.

Der Verformungsbereich 15 weist unterschiedliche Festigkeiten auf. Insbesondere nimmt die Festigkeit ausgehend von seinem setzkopfnahen Bereich zu seinem dornkopfnahen Bereich kontinuierlich zu. Der Verformungsbereich 15 weist also einen kontinuierlich zunehmenden Festigkeitsverlauf auf. Mit zunehmender Festigkeit erhöht sich die für die Umformung des Verformungsbereichs 15 erforderliche Kraft.

Der Nietvorgang wird im Folgenden anhand den Figuren 1 bis 3 näher erläutert. Beim Nietvorgang, bei dem zwei oder mehr Bauteile 32A, B miteinander verbunden werden, wird das Blindniet 2 zunächst durch ein Bohrloch in den Bauteilen 32A, B eingesteckt, bis der Setzkopf 12 auf dem äußeren Bauteil 32A aufliegt. Zur Verbindung der beiden Bauteile 32A,B wird nunmehr auf den Domschaft 8 eine Zugkraft ausgeübt, so dass der Dornkopf 18 gegen die Hülse 4 gepresst wird. Durch die ausgeübte Kraft verformt sich die Hülse in ihrem Verformungsbereich 15 und es bildet sich ein Schließkopf 34 durch Hülsenfaltung aus. Aufgrund der unterschiedlichen Festigkeitswerte im Verformungsbereich 15 entsteht der Schließkopf 34 immer unmittelbar an dem unteren Bauteil 32B, unabhängig von der Gesamtbauteildicke der beiden Bauteile 32A,32B, welche einen Klemmbereich 36 festlegt.

Der Schließkopf 34 wird solange ausgebildet, bis der Dornschaft 8 mit seinem Anschlag 24 gegen den Gegenanschlag 16 zum Anliegen kommt, so dass aufgrund der Zugbeanspruchung des Dornschafts 8 die auf ihn ausgeübte Kraft sprunghaft ansteigt und zu einem Abreißen an der Sollbruchnut 30 führt. Durch die Anordnung des Anschlags 24 und des Gegenanschlags 16 ist auf einfache Weise gewährleistet, dass ein Planbruch erzielt ist, dass also der Restdornschaft 20 mit der Oberfläche des Setzkopfes 12 plan abschließt. Durch die Ausbildung des Verformungsbereichs 15 derart, dass an unterschiedlichen Längenpositionen sich der Schließkopf ausbilden kann, ist gleichzeitig die Verbindung von Bauteilen 32A,B mit unterschiedlichen Dicken ermöglicht.

Ein derartiger Blindniet 2 hat im Vergleich zu den aus dem Stand der Technik bekannten Blindnieten den Vorteil, dass ein bündiger Abschluss des Restdoms 20 auf Höhe des Setzkopfes 12 ohne einen übermäßig aufwendigen Umformmechanismus bei der Ausbildung des Schließkopfes 34 sowie ohne einen Umformmechanismus für den Dornkopf 18 erreicht wird. Der bündige Abschluss des Restdorns 20 wirkt sich positiv auf die Tragverhaltenseigenschaften von Verbindungen mit einem solchen Blindniet 2 sowie auf die Mittragewirkung des Restdoms 20 bei einer Zugbelastung der Hülse 4 aus. Ein entscheidender Vorteil ist darüber hinaus in der Möglichkeit der Erweiterung des Klemmbereichs 36 aufgrund der speziellen Ausbildung des Verformbereichs 15 zu sehen. Der Blindniet 2 ist vorzugsweise als sogenanntes hochfestes Blindniet ausgeführt. Bei solchen hochfesten Blindnieten ist herkömmlich lediglich eine Variation des Klemmbereichs 36 um 2mm Länge ermöglicht. Diese Variation des Klemmbereichs 36 wird durch den beschriebenen Blindniet 2 um mehr als 50% auf über 3mm erweitert. Von besonderem Vorteil für die Sicherheit beim Fügen der Bauteile 32A,B ist die problemlose Kontrollmöglichkeit des Blindniets 2. Die problemlose Kontrollmöglichkeit ist durch den konstanten und von der Bauteildicke unabhängigen Weg des Dornschafts 8 bis zum Sollbruch gegeben. Der Sollbruch muss also auf jeden Fall nach einer definierten Wegstrecke erfolgen.

Der Längenausgleich bei Bauteildickenunterschieden kann neben der speziellen Position des Schließkopfes 34 zusätzlich durch eine variable Schließkopfhöhe erfolgen. Variable Schließkopfhöhe bedeutet hierbei, dass sich der Schließkopf 34 in einem größeren oder geringeren Maße auffaltet. Ein größeres Auffalten erfolgt dabei bei dünneren Bauteilen und ein geringeres Auffalten bei dickeren Bauteilen.

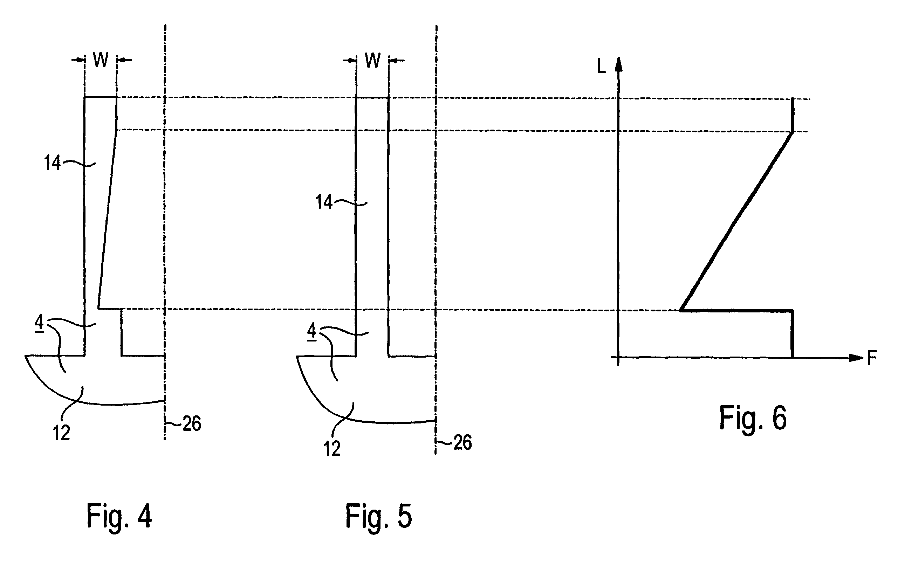

Ein wesentliches Merkmal für die Möglichkeit der Ausbildung unterschiedlicher Klemmbereiche 36 ist darin zu sehen, dass der Verformungsbereich 15 unterschiedliche Festigkeitswerte aufweist. Diese Bereiche mit unterschiedlichen Festigkeitswerten innerhalb des Verformungsbereichs 15 lassen sich beispielsweise durch eine geometrische Ausbildung verwirklichen, wie Sie gemäß Fig. 4 dargestellt ist. Danach weist der Hülsenschaft 14 im Verformungsbereich 15 unterschiedliche Wanddicken W auf. insbesondere nimmt die Wanddicke W im Verformungsbereich 15 in Richtung zum Setzkopf 12 ab.

Die unterschiedlichen Festigkeitswerte lassen sich aber auch durch eine spezielle Materialbehandlung bei gleichbleibender Wandstärke W erreichen, wie dies in Fig. 5 dargestellt ist. Eine solche Behandlung ist beispielsweise eine Wärmebehandlung mit anschließender Abkühlung. Die einzelnen Bereiche des Verformungsbereichs 15 werden unterschiedlich wärmebehandelt und abgekühlt, wodurch unterschiedliche Festigkeitswerte erzielt werden. Unter Wärmebehandlung wird hierbei ein Weichglühen verstanden. Alternativ hierzu können die Bereiche auch durch Kaltverformung nach vorhergehendem Weichglühen unterschiedlich verfestigt werden.

Vorzugsweise wird sowohl bei der Wärmebehandlung mit anschließender Abkühlung als auch bei der Kaltverfestigung ein kontinuierlicher Verlauf der Festigkeitswerte angestrebt. Insbesondere bei der Kaltverfestigung lässt sich aber auch ein diskreter Verlauf einstellen.

Aus Fig. 6 ist beispielhaft ein typischer Verlauf für die notwendige Umformkraft F zur Ausbildung eines Schließkopfes 34 in Abhängigkeit der Länge L des Dornschafts 8 dargestellt. Die Umformkraft F ist dabei ein Maß für die Festigkeit des Hülsenschafts 14. Wie der Fig. 6 zu entnehmen ist, ist die notwendige Umformkraft F in den Bereichen des Domschafts 8 außerhalb des Verformungsbereichs 15 maximal. Beginnend von dem setzkopffemen Bereich des Verformungsbereiches 15 nimmt die notwendige Umformkraft F kontinuierlich bis auf einen Minimalwert am Ende des Verformungsbereichs 15 in Nähe des Setzkopfes 12 ab um dann wieder sprunghaft auf den Maximalwert anzusteigen.

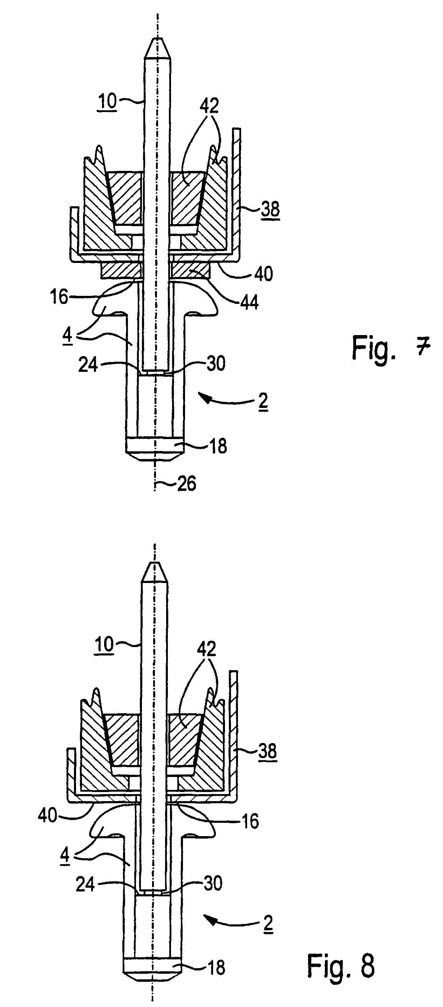

Gemäß dem Figuren 7 und 8 ist zur Durchführung des Nietvorgangs ein Setzwerkzeug 38 vorgesehen, welches ein Mundstück 40 aufweist, durch das der Dornschaft 8 geführt ist. innerhalb des Setzwerkzeugs 38 sind Elemente 42 vorgesehen, mittels denen der Dornschaft 8 beim Nietvorgang gegriffen und angezogen werden kann. Der in diesen Figuren dargestellte Blindniet 2 weist eine im Vergleich zu dem in den Figuren 1 bis 3 dargestellten Blindniet 2 vereinfachte Ausführungsform auf. Und zwar ist der Gegenanschlag 16 nunmehr nicht von der Hülse 4 sondern vielmehr von dem Setzwerkzeug 38 bereitgestellt. Gemäß Fig. 7 ist hierbei ein spezielles Zwischenstück 44 als Gegenanschlag 16 ausgebildet, wohingegen gemäß Fig. 8 das Mundstück 40 unmittelbar als Gegenanschlag 16 ausgebildet ist. Sobald der Anschlag 24 des Dornschafts 8 am Gegenanschlag 16 zum Anliegen kommt, führt dies bei Aufrechterhaltung der Zugbeanspruchung zum Abreißen des Domschafts 8 an der Sollbruchnut 30. In dieser vereinfachten Ausführungsform ist die Verriegelungsrille 28 nicht vorhanden. Wie bereits bei der Ausführungsform gemäß den Figuren 1 bis 3 ist auch bei diesem Blindniet 2 ein Planbruch selbst bei unterschiedlichen Klemmbereichen 36 gewährleistet.

### Bezugszeichenliste

- 2: Blindniet
- 4: Hülse
- 6: Bohrung
- 8: Dornschaft
- 10: Dom
- 12: Setzkopf
- 14: Hülsenschaft
- 15: Verformungsbereich
- 16: Gegenanschlag
- 18: Dornkopf
- 20: Restdornschaft
- 22: Schaftbereich
- 24: Anschlag
- 26: Längsrichtung
- 28: Verriegelungsrille
- 30: Sollbruchnut
- 32A,B: Bauteil
- 34: Schließkopf
- 36: Klemmbereich
- 38: Setzwerkzeug
- 40: Mundstück
- 42: Element
- 44: Zwischenstück

- D1,D2: Durchmesser
- W: Wanddicke
- F: Umformkraft
- L: Länge

## Patentansprüche

1. Blindniet (2) mit einer Hülse (4), die einen Setzkopf (12) und einen Hülsenschaft (14) aufweist, und mit einem durch die Hülse (4) geführten Dorn (10), der einen unverformbaren Dornkopf (18) und einen Dornschaft (8) aufweist, wobei der Hülsenschaft (14) einen sich in Längsrichtung (26) der Hülse (4) erstreckenden Verformungsbereich (15) aufweist, dessen Festigkeit in Richtung zum Setzkopf (12) kontinuierlich abnimmt, so dass an unterschiedlichen Längenpositionen des Verformungsbereichs (15) ein Schließkopf (34) durch Hülsenfaltung ausbildbar ist,
**dadurch gekennzeichnet,**
**dass** der Verformungsbereich (15) beabstandet vom Setzkopf (12) endet und die Festigkeit des Hülsenschafts (14) im Anschluss an den Verformungsbereich (15) zum Setzkopf (12) hin, insbesondere sprunghaft, auf einen höheren Festigkeitswert ansteigt.

2. Blindniet (2) nach Anspruch 1,
**dadurch gekennzeichnet,**
**dass** die beim Nietvorgang vom Dorn (10) zurückgelegte Strecke weitgehend unabhängig von der Position des ausgebildeten Schließkopfes (34) ist.

3. Blindniet (2) nach Anspruch 2,
**dadurch gekennzeichnet,**
**dass** der Dornschaft (8) einen Anschlag (24) aufweist, welcher beim Nietvorgang gegen einen Gegenanschlag (16) gepresst wird.

4. Blindniet (2) nach Anspruch 3,
**dadurch gekennzeichnet,**
**dass** der Gegenanschlag (16) an der Hülse (4) angeformt ist.

5. Blindniet (2) nach Anspruch 4,
**dadurch gekennzeichnet,**
**dass** der Anschlag (24) durch eine Verringerung des Außendurchmessers (D1,D2) des Dornschafts (8) und der Gegenanschlag (16) durch eine entsprechende Verringerung des Innendurchmessers der Hülse (4) gebildet ist.

6. Blindniet (2) nach Anspruch 3,
**dadurch gekennzeichnet,**
**dass** der Gegenanschlag (16) an einem Setzwerkzeug (38) vorgesehen ist.

7. Blindniet (2) nach einem der vorhergehenden Ansprüche,
**dadurch gekennzeichnet,**
**dass** die Hülse (4) sowie der Dorn (10) einteilig ausgebildet sind.

8. Blindniet (2) nach einem der vorhergehenden Ansprüche,
**dadurch gekennzeichnet,**
**dass** die unterschiedlichen Festigkeiten durch bereichsabhängige Wärmebehandlung mit Abkühlung gebildet sind.

9. Blindniet (2) nach einem der Ansprüche 1 bis 7,
**dadurch gekennzeichnet,**
**dass** die unterschiedlichen Festigkeiten durch bereichsabhängige Kaltverfestigung gebildet sind.

10. Blindniet (2) nach einem der Ansprüche 1 bis 7,
**dadurch gekennzeichnet,**
**dass** die unterschiedlichen Festigkeiten durch unterschiedliche Wanddicken (W) der Hülse (4) gebildet sind.

11. Blindniet (2) nach einem der vorhergehenden Ansprüche,
**dadurch gekennzeichnet,**
**dass** die Bereiche des Hülsenschafts (14) außerhalb des Verformungsbereichs (15) eine um mindestens 20% höhere Festigkeit aufweisen als der Verformungsbereich (15).

12. Blindniet (2) nach einem der vorhergehenden Ansprüche,
**dadurch gekennzeichnet,**
**dass** der Dornkopf (18) derart ausgestaltet ist, dass er vor und nach dem Nietvorgang den Hülsenschaft (14) überdeckt.

13. Blindniet (2) nach einem der vorhergehenden Ansprüche,
**dadurch gekennzeichnet,**
**dass** der Dornschaft (8) eine Verriegelungsrille (28) aufweist.

14. Verfahren zum Herstellen eines Blindniets (2) mit einer Hülse (4), die einen Setzkopf (12) und einen sich daran anschließenden Hülsenschaft (14) aufweist, wobei der Hülsenschaft (14) mit einem Verformungsbereich (15) versehen wird, der zur Ausbildung eines Schließkopfes (34) beim Nietvorgang dient und der (15) mit in Richtung zum Setzkopf (12) zunehmend geringerer Festigkeit ausgebildet wird, so dass der Schließkopf (34) an unterschiedlichen Längenpositionen des Verformungsbereichs (15) ausbildbar ist.
**dadurch gekennzeichnet,**
**dass** der Verformungsbereich (15) beabstandet vom Setzkopf (12) endet und die Festigkeit des Hülsenschafts (14) im Anschluss an den Verformungsbereich (15) zum Setzkopf (12) hin, insbesondere sprunghaft, auf einen höheren Festigkeitswert eingestellt wird.

15. Verfahren nach Anspruch 14,
**dadurch gekennzeichnet,**
**dass** die unterschiedlichen Festigkeiten durch bereichsabhängige Wärmebehandlung mit anschließender Abkühlung gebildet werden.

16. Verfahren nach Anspruch 14,
**dadurch gekennzeichnet,**
**dass** die unterschiedlichen Festigkeiten durch bereichsabhängige Kaltverfestigung gebildet werden.

17. Verfahren nach Anspruch 14,
**dadurch gekennzeichnet,**
**dass** zur Ausbildung der unterschiedlichen Festigkeiten die Wanddicke (W) der Hülse (4) unterschiedlich ausgebildet wird.

## Claims

1. Blind rivet (2) with a sleeve (4) which has a set head (12) and a sleeve shank (14), and with a mandrel (10) which is guided through the sleeve (4) and has a non-deformable mandrel head (18) and a mandrel shank (8), the sleeve shank (14) having a deformation region (15) which extends in the longitudinal direction (26) of the sleeve (4) and the strength of which decreases continuously in the direction of the set head (12), so that a closing head (34) can be formed at different longitudinal positions of the deformation region (15) by sleeve folding, **characterized in that** the deformation region (15) ends at a spacing from the set head (12) and the strength of the sleeve shank (14) increases to a higher strength value, in particular sharply, towards the set head (12) following the deformation region (15).

2. Blind rivet (2) according to Claim 1, **characterized in that** the distance travelled by the mandrel (10) during the riveting operation is to a great extent independent of the position of the closing head (34) formed.

3. Blind rivet (2) according to Claim 2, **characterized in that** the mandrel shank (8) has a stop (24) which is pressed against a counterstop (16) during the riveting operation.

4. Blind rivet (2) according to Claim 3, **characterized in that** the counterstop (16) is formed on the sleeve (4).

5. Blind rivet (2) according to Claim 4, **characterized in that** the stop (24) is formed by a reduction of the outside diameter (D1, D2) of the mandrel shank (8) and the counterstop (16) is formed by a corresponding reduction of the inside diameter of the sleeve (4).

6. Blind rivet (2) according to Claim 3, **characterized in that** the counterstop (16) is provided on a setting tool (38).

7. Blind rivet (2) according to one of the preceding claims, **characterized in that** the sleeve (4) and also the mandrel (10) are designed in one piece.

8. Blind rivet (2) according to one of the preceding claims, **characterized in that** the different strengths are formed by region-dependent heat treatment with cooling.

9. Blind rivet (2) according to one of Claims 1 to 7, **characterized in that** the different strengths are formed by region-dependent strain-hardening.

10. Blind rivet (2) according to one of Claims 1 to 7, **characterized in that** the different strengths are formed by different wall thicknesses (W) of the sleeve (4).

11. Blind rivet (2) according to one of the preceding claims, **characterized in that** the regions of the sleeve shank (14) outside the deformation region (15) have a strength greater by at least 20% than the deformation region (15).

12. Blind rivet (2) according to one of the preceding claims, **characterized in that** the mandrel head (18) is designed in such a way that it covers the sleeve shank (14) before and after the riveting operation.

13. Blind rivet (2) according to one of the preceding claims, **characterized in that** the mandrel shank (8) has a locking groove (28).

14. Method for producing a blind rivet (2) with a sleeve (4) which has a set head (12) and a sleeve shank (14) adjoining the latter, the sleeve/shank (14) being provided with a deformation region (15) which serves for forming a closing head (34) during the riveting operation and which (15) is designed with increasingly lower strength in the direction of the set head (12), so that the closing head (34) can be formed at different longitudinal positions of the deformation region (15), **characterized, in that** the deformation region (15) ends at a spacing from the set head (12) and the strength of the sleeve shank (14) is adjusted to a higher strength value, in particular sharply, towards the set head (12) following the deformation region (15).

15. Method according to Claim 14, **characterized in that** the different strengths are formed by region-dependent heat treatment with subsequent cooling.

16. Method according to Claim 14, **characterized in that** the different strengths are formed by region-dependent strain-hardening.

17. Method according to Claim 14, **characterized in that** the wall thickness (W) of the sleeve (4) is designed differently for forming the different strengths.

## Revendications

1. Rivet aveugle (2) avec un manchon (4) comprenant une tête de rivet (12) et une tige de manchon. (14), et avec un mandrin (10) conduit à travers le manchon (4), le mandrin comprenant une tête de mandrin (19) indéformable et une tige de mandrin (8), moyennant quoi la tige de manchon (14) comprend une zone de déformation (15) s'étendant dans le sens longitudinal (26) du manchon (4), dont la résistance décroît. continuellement en direction de la tête de rivet (12), de sorte qu'une tête de fermeture (34) peut être configurés à différentes positions longitudinales de la zone de déformation (15) par le plissement du manchon,
**caractérisé en ce que**
la zone de déformation (15) se termine à distance de la tête de rivet (12), et la résistance de la tige de manchon (14) comme suite à la zone de déformation (15) en direction de la tête de rivet, augmente de manière discontinue jusqu'à une valeur de résistance supérieure.

2. Rivet aveugle (2) selon la revendication 1,
**caractérisé en ce que**
la distance parcourue lors du procédé de rivetage par le mandrin (10) est largement indépendante de la position de la tête de fermeture (34) formée.

3. Rivée aveugle (2) selon la revendication 2,
**caractérisé en ce que**
la tige de mandrin (8) comprend une butée (24) qui est comprimée lors du procédé de rivetage contre une contre-butée (16).

4. Rivet aveugle (2) selon la revendication 3,
**caractérisé en ce que**
la contre-butée (16) est formée contre le manchon (4).

5. Rivet aveugle (2) selon la revendication 4,
**caractérisé en ce que**
la butée (24) est formée par une diminution, du diamètre externe (D1,D2) de la tige de mandrin (8) et de la contre-butée (16) par une diminution correspondante du diamètre interne du manchon (4).

6. Rivet aveugle (2) selon la revendication 3,
**caractérisé en ce que**
la contre-butée (16) est prévue sur un outil de rivet (38).

7. Rivet aveugle (2) selon l'une des revendications précédentes,
**caractérisé en ce que**
le manchon (4) et le mandrin (10) sont configurés en une seule pièce.

8. Rivet aveugle (2) selon l'une des revendications précédentes,
**caractérisé en ce que**
les différentes résistances sont formées par le traitement thermique en fonction des zones avec refroidissement.

9. Rivet aveugle (2) selon l'une des revendications 1 à 7,
**caractérisé en ce que**
les différentes résistances sont formées par l'écrouissage en fonction des zones.

10. Rivet aveugle (2) selon l'une des revendications 1 à 7,
**caractérisé en ce que**
les différentes résistances sont formées par des épaisseurs de paroi (W) variables du manchon (4).

11. Rivet aveugle (2) selon l'une des revendications précédentes,
**caractérisé en ce que**
les zones de la tige de manchon (14) présentent en dehors de la zone de déformation (15) une résistance supérieure d'au moins 20 % par rapport à la zone de déformation (15).

12. Rivet aveugle (2) selon l'une des revendications précédentes,
**caractérisé en ce que**
la tête de mandrin (18) est conçue de telle sorte qu'elle recouvre la tige de manchon (14) avant et après le procédé de rivetage.

13. Rivet aveugle (2) selon l'une des revendications précédentes,
**caractérisé en ce que**
la tige de mandrin (8) comprend une rainure de verrouillage (28).

14. Procédé de fabrication d'un rivet aveugle (2) avec un manchon (4) comprenant une tête de rivet (12) et une tige de manchon (14) raccordée à celle-ci, la tige de manchon (14) étant dotée d'une zone de déformation (15) qui sert à la formation d'une tête de fermeture (34) lors du procédé de rivetage, et qui (15) est configurée avec une résistance de plus en plus faible dans la direction de la tête de rivet (12), de sorte que la tête de fermeture (34) peut être configurée sur différentes positions longitudinales de la zone de déformation (15),
**caractérisé en ce que**
la zone de déformation (15) se termine à distance de la tête de rivet (12), et la résistance de la tige de manchon (14) comme suite à la zone de déformation (15) en direction de la tête de rivet (12), est réglée de manière discontinue sur une valeur de résistance supérieure.

15. Procédé selon la revendication 14,
**caractérisé en ce que**
les différentes résistances sont formées par le traitement thermique en fonction des zones avec refroidissement ultérieur.

16. Procédé selon la revendication 14,
**caractérisé en ce que**
les différentes résistances sont formées par l'écrouissage en fonction des zones.

17. Procédé selon la revendication 14,
**caractérisé en ce que**
l'épaisseur de paroi (w) du manchon (4) est configurée de manière variable pour la formation des différentes résistances.
